# EUROPÄISCHE PATENTSCHRIFT

(11) **EP 4 560 917 B1**
(45) Veröffentlichungstag und Bekanntmachung des Hinweises auf die Patenterteilung: **31.12.2025**
(21) Anmeldenummer: 23211544.4
(22) Anmeldetag: 22.11.2023
(51) Int. Cl.: H02S 20/10, F24S 25/12, F24S 25/33, H02S 20/23

(54) **CARPORT MIT INTEGRIERTEN SOLARMODULEN, MODULTRÄGER FÜR EINEN CARPORT MIT INTEGRIERTEN SOLARMODULEN SOWIE VERFAHREN ZUR ERRICHTUNG EINES CARPORTS MIT INTEGRIERTEN SOLARMODULEN**
CARPORT WITH INTEGRATED SOLAR MODULES, MODULE SUPPORT FOR A CARPORT WITH INTEGRATED SOLAR MODULES, AND METHOD FOR ERECTING A CARPORT WITH INTEGRATED SOLAR MODULES
ABRI DE TRANSPORT À MODULES SOLAIRES INTÉGRÉS, SUPPORT DE MODULE POUR ABRI DE TRANSPORT À MODULES SOLAIRES INTÉGRÉS ET PROCÉDÉ D'ÉRECTION D'UN ABRI DE TRANSPORT À MODULES SOLAIRES INTÉGRÉS

(43) Veröffentlichungstag der Anmeldung: 28.05.2025
(73) Patentinhaber: GREENoneTEC Solarindustrie GmbH, 9300 St. Veit (AT)
(72) Erfinder: Poscharnig, Harald, 9063 Maria Saal (DE)
(74) Vertreter: Berkenbrink, Kai-Oliver

(56) Entgegenhaltungen:
- EP-A1- 4 167 471
- EP-B1- 3 818 312
- WO-A1-2023/284904
- DE-U1- 202023 104 614

## Beschreibung

Die Erfindung betrifft einen Carport mit integrierten Solarmodulen, einen Modulträger für einen Carport mit integrierten Solarmodulen sowie ein Verfahren zur Errichtung eines Carports mit integrierten Solarmodulen.

Ein Solarmodul, das auch als Photovoltaikmodul oder Solarpaneel bezeichnet wird, wandelt das Licht der Sonne in elektrische Energie um. Ein solches Solarmodul umfasst Solarzellen, die in eine tafelförmige Konstruktion eingebettet sind. Insgesamt weisen Solarmodule regelmäßig eine platten- beziehungsweise tafelförmige Struktur mit einer rechteckigen Außenkontur auf. Solarmodule sind auch in Form sogenannter Hybridmodule, die auch als PVT-Module bezeichnet werden, bekannt. Solche Hybridmodule erzeugen nicht nur elektrische Energie, sondern wirken auch als Solarthermiemodul und wandeln insoweit die Sonnenstrahlung in Wärme um. Unter einem "Solarmodul" wird hierin sowohl ein "reines" Solarmodul als auch ein solches Hybridmodul verstanden.

Ein Carport ist ein überdachter Stellplatz für Autos. Carports können freistehend oder an Gebäude angebaut sein. Bekannt sind Carports mit integrierten Solarmodulen. Der durch diese integrierten Solarmodule erzeugte elektrische Strom kann vorteilhaft zum Laden von durch das Carport überdachte Autos verwendet werden. Solche Carports mit integrierten Solarmodulen werden auch als Solarports bezeichnet. Die Solarmodule können zumindest einen Teil des Daches des Carports bilden.

Üblicherweise umfassen Carports eine Tragkonstruktion, Befestigungsstreben und Solarmodule. Die Solarmodule werden an den Befestigungsstreben montiert und bilden üblicherweise das Dach des Carports. Durch die Tragkonstruktion ist das Dach des Carports auf einem Untergrund aufstellbar. Zum Errichten eines Carports wird üblicherweise zunächst die Tragkonstruktion auf einem Untergrund aufgestellt. Anschließend werden die Befestigungsstreben auf der Tragkonstruktion befestigt und schließlich die Solarmodule an den Befestigungsstreben angeordnet. Als Befestigungsstreben werden regelmäßig Profilschienen verwendet. An diesen können die Solarmodule mittels Modulklemmen oder durch eine Klebeverbindung befestigt werden. Ein solcher Carport ist zum Beispiel in dem Dokument EP 4167471 A1 offenbart.

Grundsätzlich haben sich solche Carports mit integrierten Solarmodulen bewährt. Nachteilig ist jedoch, dass die Befestigungsstreben und die Solarmodule beim Errichten des Carports bauseitig exakt aufeinander abzustimmen sind, um eine optimale Befestigung der Solarmodule an den Befestigungsstreben zu gewährleisten. Dabei kann es jedoch zu einer fehlerhaften Anpassung von Befestigungsstreben und Solarmodulen zueinander kommen, so dass die Solarmodule gegebenenfalls nicht optimal an den Befestigungsstreben befestigt sind. Hierdurch kann es jedoch zu einer Teilablösung der Befestigung kommen, wodurch die Dichtigkeit des aus den Befestigungsstreben und den Solarmodulen gebildeten Daches nicht mehr gewährleistet ist. Im extremsten Fall kann es hierdurch jedoch auch zu einem unbeabsichtigten vollständigen Lösen von Solarmodulen kommen, beispielsweise bei Sturm. Personen oder Gegenstände können hierdurch gefährdet werden. Nachteilig an der vorbezeichneten, üblichen Technologie zur Errichtung von Carports mit integrierten Solarmodulen ist ferner der Umstand, dass die Solarmodule stets bauseitig mit den Befestigungsstreben verklebt werden. Aufgrund der bauseitig herrschenden Witterungsbedingungen können die miteinander zu verklebenden Oberflächen jedoch gegebenenfalls nicht optimal hergerichtet sein, also beispielsweise nicht sauber oder trocken sein. Hierdurch kann eine optimale Klebeverbindung nicht immer gewährleistet werden. Auch dies kann, insbesondere bei Extremwetterereignissen, wiederum zu einem unbeabsichtigten teilweisen oder vollständigen Lösen von Solarmodulen führen.

Der Erfindung liegt die Aufgabe zugrunde, einen Carport mit integrierten Solarmodulen zur Verfügung zu stellen, der einfach und sicher errichtet werden kann. Insbesondere soll der Carport einfacher und sicherer errichtbar sein als die aus dem Stand der Technik bekannten Carports, bei denen die Solarmodule bauseitig mit den Befestigungsstreben verbunden werden. Eine zusätzliche Aufgabe der Erfindung besteht darin, bauseitig eine nicht nur einfachere und sichere, sondern insbesondere auch schnellere Errichtung von Carports mit integrierten Solarmodulen zu ermöglichen.

Eine weitere Aufgabe der Erfindung besteht darin, ein Verfahren zur Errichtung eines solchen Carports mit integrierten Solarmodulen zur Verfügung zu stellen.

Erfindungsgemäß wird die Aufgabe gelöst durch einen Carport mit integrierten Solarmodulen, gemäß dem Anspruch 1.

Ein wesentlicher Gedanke der Erfindung beruht darauf, dass der erfindungsgemäße Carport wenigstens einen Modulträger umfasst, der wenigstens zwei Solarmodulen umfasst und als einteiliges Bauelement ausgeführt ist. Der wenigstens eine Modulträger bildet zusammen mit den wenigstens zwei Solarmodulen damit ein integrales Bauelement. Dies ermöglicht es, einen Modulträger zusammen mit den diese umfassenden Solarmodulen als vorgefertigtes, einteiliges Bauelement zur Verfügung zu stellen, das bauseitig nur noch als einteiliges Bauelement mit der Tragkonstruktion zu verbinden ist, um einen Carport mit integrierten Solarmodulen zu erstellen.

Dieser Erfindungsgedanke beruht insbesondere auf der erfindungsgemäßen Erkenntnis, dass bauseitig eine optimale Verbindung der Solarmodule mit Befestigungsstreben praktisch nie gewährleistet werden kann. Auch ist eine zeitlich optimierte Errichtung von Carports mit integrierten Solarmodulen bauseitig nicht möglich, wenn dort die Solarmodule mit den Befestigungsstreben zu verbinden sind. Vielmehr wurde erfindungsgemäß erkannt, dass bauseitig eine technisch und zeitlich optimale Errichtung von Carports mit integrierten Solarmodulen nur gewährleistet werden kann, wenn zur Errichtung des Carports Modulträger zur Verfügung gestellt werden, die bereits wenigstens zwei Solarmodule umfassen und die als einteiliges Bauelement ausgeführt sind. Denn dies ermöglicht eine werksseitige Vorkonfektionierung eines solchen Modulträgers. Werksseitig herrschen jedoch definierte Umgebungsbedingungen, unter denen die Solarmodule optimal mit dem jeweiligen Modulträger verbunden werden können. Ein solch vorkonfektionierter Modulträger mit integrierten Solarmodulen kann dann als solcher einteilig als Vorprodukt zum Ort der Errichtung des Carports transportiert werden. Bauseitig sind die vorgefertigten Modulträger, die bereits die wenigstens zwei Solarmodulen umfassen, dann nur noch mit der Tragkonstruktion zu verbinden, wodurch ein Carport bauseitig sicherheitstechnisch und zeitlich optimal errichtet werden kann.

Der wenigstens eine Modulträger des erfindungsgemäßen Carports, der die wenigstens zwei Solarmodule umfasst, ist insoweit als einteiliges Bauelement ausgeführt, das als solch einteiliges Bauelement über eine Verbindung mit der Tragkonstruktion verbindbar ist.

Ein "einteiliges" Bauelement im Sinne der Erfindung bedeutet ein "einstückiges" Bauteil, also ein diskretes Bauteil, das in einem Stück bewegbar ist. Ein solch einteiliges Bauelement kann damit zwar aus mehreren Komponenten bestehen, insbesondere beispielsweise aus mehreren Metallprofilen, mehreren Solarmodulen und mehreren Verbindungsmitteln; es stellt jedoch ein einteiliges Bauelement als solches dar, das in einem Stück bewegbar beziehungsweise transportierbar ist. Insoweit ist ein erfindungsgemäß als einteiliges Bauelement ausgeführter Modulträger als solch einteiliges Bauelementüber eine Verbindung mit der Tragkonstruktion verbindbar.

Der wenigstens eine Modulträger, der erfindungsgemäß die wenigstens zwei Solarmodule umfasst, kann insbesondere das "Dach" des erfindungsgemäßen Carports bilden. Entsprechend ist der wenigstens eine Modulträger über die Verbindung derart mit der Tragkonstruktion verbunden, dass die Tragkonstruktion den wenigstens einen Modulträger über dem Untergrund trägt. Zweckmäßig trägt die Tragkonstruktion den wenigstens einen Modulträger derart über dem Untergrund, dass wenigstens ein Fahrzeug, insbesondere wenigstens ein Auto, unter dem wenigstens einen Modulträger abstellbar ist.

Nach einer bevorzugten Ausführungsform umfasst der wenigstens eine Modulträger einen Träger sowie wenigstens zwei Solarmodule. Der Träger dient insbesondere zur Aufnahme der wenigstens zwei Solarmodule. Insbesondere können die wenigstens zwei Solarmodule mit dem Träger verbunden sein. Insoweit kann der Modulträger neben dem Träger und den wenigstens zwei Solarmodulen Verbindungsmittel umfassen, über die die wenigstens zwei Solarmodule mit dem Träger verbunden sind. Der Träger und die wenigstens zwei Solarmodule, sowie ferner gegebenenfalls die Verbindungsmittel, können insoweit bevorzugt als ein einteiliges Bauelement ausgeführt sein und den wenigstens einen Modulträger des erfindungsgemäßen Carports bilden.

Erfindungsgemäß wurde festgestellt, dass ein Modulträger, der erfindungsgemäß die wenigstens zwei Solarmodulen umfasst und als einteiliges Bauelement mit der Tragkonstruktion verbunden ist, besonders einfach und stabil zur Verfügung gestellt werden kann, wenn der Träger aus Metallprofilen erstellt ist und insbesondere als Metallrahmenkonstruktion ausgeführt ist.

Nach einer bevorzugten Ausführungsform umfasst der wenigstens eine Modulträger daher Metallprofile, wobei der Träger des Modulträgers bevorzugt aus Metallprofilen ausgeführt ist. Nach einer Fortbildung dieses Erfindungsgedankens umfasst der wenigstens eine Modulträger insoweit einen aus Metallprofilen ausgeführte Träger sowie die wenigstens zwei Solarmodule, die bevorzugt mit den Metallprofilen verbunden sind.

Nach einer besonders bevorzugten Ausführungsform ist der wenigstens eine Modulträger als Metallrahmenkonstruktion ausgeführt, wobei der Träger des Modulträgers bevorzugt als Metallrahmenkonstruktion ausgeführt ist. Nach einer Fortbildung dieses Erfindungsgedankens umfasst der wenigstens eine Modulträger insoweit einen als Metallrahmenkonstruktion ausgeführten Träger sowie die wenigstens zwei Solarmodule, die bevorzugt mit der Metallrahmenkonstruktion verbunden sind.

Die Metallprofile beziehungsweise die Metallrahmenkonstruktion des Modulträgers können insbesondere aus Stahl oder Aluminium bestehen.

Ein besonderer Vorteil des wenigstens einen Modulträgers, der aus Metallprofilen ausgeführt ist und bevorzugt als Metallrahmenkonstruktion ausgeführt ist, besteht insbesondere darin, dass ein solcher Modulträger besonders einfach und stabil zusammen mit den diese umfassenden wenigstens zwei Solarmodulen als einteiliges, insbesondere integrales Bauelement zur Verfügung gestellt werden kann.

Nach einer bevorzugten Ausführungsform umfasst der wenigstens eine Modulträger aus Metallprofilen gebildete Rahmen, insbesondere, soweit der wenigstens eine Modulträger, wie zuvor ausgeführt, als Metallrahmenkonstruktion ausgeführt ist. Durch diese Rahmen wird ein Raum bevorzugt umseitig vollständig umschlossen. Besonders bevorzugt dienen die aus den Metallprofilen des Modulträgers gebildeten Rahmen jeweils dazu, ein Solarmodul aufzunehmen. Besonders bevorzugt ist jeweils ein Solarmodul der wenigstens zwei Solarmodule in einem solchen Rahmen angeordnet. Nach einer besonders bevorzugten Ausführungsform umfasst der Träger des wenigstens eine Modulträger aus Metallprofilen gebildete Rahmen, insbesondere, soweit der Träger, wie zuvor ausgeführt, als Metallrahmenkonstruktion ausgeführt ist. Nach einer besonders bevorzugten Fortbildung dieses Erfindungsgedankens ist jeweils ein Solarmodul der wenigstens zwei Solarmodule in einem solchen Rahmen angeordnet und besonders bevorzugt mit dem Träger verbunden.

Nach einer bevorzugten Ausführungsform kann daher vorgesehen sein, dass die wenigstens zwei Solarmodule jeweils von einem dieser Rahmen seitlich eingefasst sind. Besonders bevorzugt sind die wenigstens zwei Solarmodule seitlich vollständig von dem Rahmen eingefasst, also umseitig vollständig beziehungsweise entlang ihrer Außenkanten von dem Rahmen seitlich eingefasst.

Erfindungsgemäß wurde festgestellt, dass ein solcher Modulträger, der aus Metallprofilen gebildete Rahmen umfasst, in denen jeweils ein Solarmodul angeordnet und bevorzugt befestigt ist, besonders einfach als einteiliges Bauelement zur Verfügung gestellt werden kann. Denn ein derart ausgebildeter Modulträger kann besonders kompakt und gleichzeitig stabil, insbesondere äußerst biegesteif, als einteiliges Bauelement zur Verfügung gestellt werden.

Erfindungsgemäß umfasst der erfindungsgemäße Carport wenigstens einen solchen Modulträger, der wenigstens zwei Solarmodule umfasst und als einteiliges Bauelement mit der Tragkonstruktion verbunden ist. Nach einer bevorzugten Ausführungsform umfasst der erfindungsgemäße Carport wenigstens zwei oder mehr solcher Modulträger. Indem der erfindungsgemäße Carport mehrere solcher Modulträger umfasst, kann der Carport zeitlich besonders optimiert und sicher errichtet werden.

Wie zuvor ausgeführt, umfasst der wenigstens einen Modulträger wenigstens zwei Solarmodule. Nach einer bevorzugten Fortbildung dieses Erfindungsgedankens umfasst der wenigstens eine Modulträger bevorzugt eine Anzahl im Bereich von zwei bis acht, besonders bevorzugt eine Anzahl im Bereich von vier bis sechs Solarmodule. Erfindungsgemäß wurde festgestellt, dass ein Modulträger, der einer solche Anzahl von Solarmodulen umfasst, zum einen eine Größe aufweist, aufgrund derer er noch gut transportierbar und an der Tragkonstruktion befestigbar ist, gleichzeitig aufgrund der Anzahl der Solarmodule, die der Modulträger umfasst, jedoch eine zeitlich besonders optimierte Errichtung eines Carports ermöglicht.

Soweit der wenigstens eine Modulträger daher aus Metallprofilen gebildete Rahmen umfasst, in die jeweils ein Solarmodul eingefasst ist, kann nach einer bevorzugten Ausführungsform vorgesehen sein, dass der wenigstens eine Modulträger zwei bis acht, besonders bevorzugt vier bis sechs aus Metallprofilen gebildete Rahmen umfasst, wobei die Rahmen, wie zuvor ausgeführt, insbesondere durch den Träger gebildet sind.

Nach einer bevorzugten Ausführungsform sind die wenigstens zwei Solarmodule, die der wenigstens eine Modulträger umfasst, ein integraler Bestandteil des Modulträgers. Nach einer bevorzugten Ausführungsform kann insoweit vorgesehen sein, dass die wenigstens zwei Solarmodule mit dem Träger des Modulträgers verbunden sind.

Nach einer besonders bevorzugten Ausführungsform ist vorgesehen, dass die wenigstens zwei Solarmodule stoffschlüssig mit dem Träger des Modulträges verbunden sind. Besonders bevorzugt kann insoweit vorgesehen sein, dass die wenigstens zwei Solarmodule mit dem Träger verklebt sind, also über eine Klebeverbindung stoffschlüssig mit diesem verbunden sind. Eine solche stoffschlüssige Klebeverbindung erlaubt eine besonders sichere, schnelle und einfache Verbindung der Solarmodule mit dem Träger.

Als Kleber zur Realisierung der Klebeverbindung kann grundsätzlich jeder aus dem Stand der Technik bekannt Kleber zur Verklebung von Solarmodulen an einer Haltevorrichtung zur Haltung der Solarmodule vorgesehen sein. Nach einer bevorzugten Ausführungsform können 2-Komponenten-Kleber oder 1-Komponenten-Kleber, beispielsweise 1-Komponenten-Silikon-Kleber vorgesehen sein.

Nach einer Fortbildung dieses Erfindungsgedankens kann nach einer besonders bevorzugten Ausführungsform vorgesehen sein, dass die wenigstens zwei Solarmodule mit dem diese jeweils seitlich einfassenden Rahmen verklebt sind. Die stoffschlüssige Verbindung beziehungsweise Klebeverbindung zwischen dem Träger des wenigstens einen Modulträgers mit den wenigstens zwei Solarmodulen ist insoweit dadurch hergestellt, dass die wenigstens zwei Solarmodule jeweils mit dem diese jeweils seitlich einfassenden Rahmen verklebt sind. Hierdurch ist eine besonders einfache, schnelle und biegesteife Zurverfügungstellung des einteiligen Bauelementes realisierbar.

Über eine solch stoffschlüssige Verbindung, insbesondere Klebeverbindung, hinaus kann vorgesehen sein, dass die Solarmodule mit Träger des wenigstens einen Modulträgers noch durch eine kraftschlüssige oder eine formschlüssige Verbindung verbunden sind. Der Vorteil einer solch zusätzlichen kraft- oder formschlüssigen Verbindung besteht insbesondere auch darin, dass diese bei Lösung der stoffschlüssigen Verbindung eine zusätzliche Sicherung gegen die Ablösung der Solarmodule von dem Träger darstellen. Eine solche kraft- oder formschlüssige Verbindung kann beispielsweise über die aus dem Stand der Technik bekannten Modulklemmen oder Profilschienen gebildet sein, die zur Verbindung von Solarmodulen mit Befestigungsstreben bekannt sind.

Es liegt auch im Rahmen der Erfindung, dass die Solarmodule mit dem Träger des wenigstens einen Modulträgers ausschließlich durch eine solch kraftschlüssige oder eine formschlüssige Verbindung verbunden sind, wenngleich dies weniger bevorzugt ist.

Besonders bevorzugt kann nach einer Ausführungsform vorgesehen sein, dass der Träger des wenigstens einen Modulträgers als einteiliges Bauelement ausgeführt ist. Indem der Träger als solch einteiliges Bauelement zur Verfügung gestellt wird, können die Solarmodule besonders einfach und schnell mit dem Träger verbunden werden, so dass die mit dem Träger verbundenen wenigstens zwei Solarmodule anschließend besonders einfach und schnell als ein Modulträger in Form eines einteiligen Bauelementes für die Erstellung des erfindungsgemäßen Carports zur Verfügung gestellt werden können.

Nach einer bevorzugten Ausführungsform weist der wenigstens eine Modulträger eine rechteckige Außenkontur auf. Eine solch rechteckige Außenkontur hat insbesondere den Vorteil, dass der wenigstens eine Modulträger, insbesondere in Kombination mit weiteren solchen Modulträgern, besonders einfach und schnell zu einem, insbesondere durchgehenden, Dach eines Carports konfektioniert werden kann.

Die Solarmodule, die der wenigstens eine Modulträger umfasst, können bevorzugt gemäß den aus dem Stand der Technik bekannten, üblichen Solarmodulen konfektioniert sein. Bevorzugt weisen diese die übliche, rechteckige Außenkontur von Solarmodulen auf, so dass diese besonders einfach in Rahmen des Modulträgers, wie oben ausgeführt, angeordnet und befestigt werden können.

Nach einer besonders bevorzugten Ausführungsform ist vorgesehen, dass die Verbindung, mittels derer der wenigstens eine Modulträger mit der Tragkonstruktion verbunden ist, lösbar ist.

Unter eine "Iösbaren" Verbindung wird in diesem Sinne gemäß der üblichen Nomenklatur auf dem Gebiet der Verbindungstechnik eine Verbindung verstanden, die ohne Beschädigung der Bauteile wieder gelöst werden kann.

Durch einfaches Lösen der Verbindung zwischen dem wenigstens einen Modulträger und der Tragkonstruktion ist der wenigstens eine Modulträger damit nicht mehr mit der Tragkonstruktion verbunden und kann nach Lösen der Verbindung einfach und schnell wieder von der Tragkonstruktion abgenommen werden, ohne dass Modulträger oder Tragkonstruktion hierfür in irgendeiner Weise beschädigt werden müssten. Besonders vorteilhaft ist in insoweit auch, dass der wenigstens eine Modulträger als einteiliges Bauelement ausgeführt ist. Denn hierdurch ist nach Lösen dieser Verbindung der wenigstens eine Modulträger als einteiliges Bauelement von der Tragkonstruktion abnehmbar, was eine besonders einfache und schnelle Abnahme der Solarmodule, die der Modulträger umfasst, von der Tragkonstruktion erlaubt.

Dies ermöglicht es insbesondere auch, Solarmodule zeitlich optimiert von der Tragkonstruktion zu lösen und beispielsweise durch einen erfindungsgemäßen, Solarmodule umfassenden Modulträger zu ersetzen. Ein solcher Austausch der Solarmodule kann beispielsweise gewünscht sein, wenn die bestehenden Solarmodule beschädigt sind oder durch leistungsstärkere Solarmodule ersetzt werden sollen.

Die Verbindung, über die der wenigstens eine Modulträger mit der Tragkonstruktion verbunden ist, kein ein oder mehrere Verbindungsmittel umfassen. Bei diesen Verbindungsmitteln kann es sich um ein oder mehrere, insbesondere auch unterschiedliche, Verbindungsmittel handeln. Insbesondere können diese Verbindungsmittel solche Verbindungsmittel umfassen, die aus dem Stand der Technik bekannt sind, um Modulträger an der Tragkonstruktion eines Carports zu befestigen.

Bevorzugt ist der wenigstens eine Modulträger erfindungsgemäß über eine kraftschlüssige Verbindung mit der Tragkonstruktion verbunden. Besonders bevorzugt ist der wenigstens eine Modulträger über eine Schraubverbindung mit der Tragkonstruktion verbunden. Erfindungsgemäß hat sich herausgestellt, dass der wenigstens eine Modulträger mittels einer Schraubverbindung als einteiliges Bauelement besonders schnell, einfach und sicher mit der Tragkonstruktion verbindbar ist. Ganz besonders bevorzugt ist der wenigstens eine Modulträger ausschließlich mittels einer Schraubverbindung mit der Tragkonstruktion verbunden. Dies hat insbesondere auch den Vorteil, dass der wenigstens eine Modulträger allein durch Lösen der Schraubverbindung als einteiliges Bauelement, also insbesondere auch zusammen mit den damit verbundenen Solarmodulen, zur Gänze wieder von der Tragkonstruktion lösbar ist. Die Schraubverbindung umfasst bevorzugt mehrere Verbindungsmittel, also insbesondere mehrere Schrauben beziehungsweise Verschraubungen, wodurch die Lastaufnahme der Tragkonstruktion vergleichmäßigt werden kann.

Nach einer bevorzugten Ausführungsform ist die Tragkonstruktion aus wenigstens einem der folgenden Werkstoffe ausgebildet: Metall, Holz. Dies ermöglicht eine besonders sichere und standfeste Errichtung des erfindungsgemäßen Carports.

Nach einer bevorzugten Ausführungsform umfasst die Tragkonstruktion Pfosten, über die die Tragkonstruktion an einem Untergrund angeordnet ist. Die Pfosten verlaufen bei Anordnung der Tragkonstruktion am Untergrund vertikal. Die Pfosten können bevorzugt aus Metall, besonders bevorzugt aus Stahl bestehen.

Nach einer bevorzugten Ausführungsform umfasst die Tragkonstruktion wenigstens einen Querträger. Die Querträger verlaufen bevorzugt horizontal. Bevorzugt sind die Querträger oberseitig der Pfosten mit diesen verbunden. Der wenigstens eine Querträger besteht bevorzugt aus Metall, besonders bevorzugt aus Stahl oder Aluminium.

Erfindungsgemäß hat sich herausgestellt, dass der wenigstens eine Modulträger besonders vorteilhaft als einteiliges Bauelement mit einem Querträger der Tragkonstruktion verbindbar ist. Denn erfindungsgemäß hat sich zum einen herausgestellt, dass die - teilweise erhebliche - Last eines als solch einteiliges Bauelement ausgeführten Modulträgers besonders vorteilhaft von einem oder mehreren solchen Querträgern aufnehmbar und über Pfosten an den Untergrund ableitbar ist. Zum anderen hat sich herausgestellt, dass ein solch als einteiliges Bauelement ausgeführter Modulträger besonders schnell, einfach und sicher mit einem Querträger der Tragkonstruktion verbindbar und auch wieder von dieser lösbar ist. Gegenstand der Erfindung ist auch ein Modulträger für einen Carport mit integrierten Solarmodulen, gemäß dem Anspruch 12.

Der Modulträger kann wie hierin offenbart ausgeführt sein.

Der Modulträger kann sämtliche der hierin offenbarten Merkmale des Modulträgers, einzeln oder in Kombination, aufweisen.

Gegenstand der Erfindung ist auch ein Verfahren zur Errichtung eines Carports mit integrierten Solarmodulen, gemäß dem Anspruch 13.

Die Komponenten des durch das erfindungsgemäße Verfahren zu errichtenden Carports, also insbesondere auch der wenigstens eine Modulträger und die Tragkonstruktion, können wie hierin offenbart ausgeführt sein.

Die für das Verfahren zur Verfügung gestellte Tragkonstruktion kann sämtliche der hierin offenbarten Merkmale der Tragkonstruktion, einzeln oder in Kombination, aufweisen. Ferner können die Schritte des erfindungsgemäßen Verfahrens wie vorstehend ausgeführt durchgeführt werden.

Insbesondere kann auch, wie zuvor ausgeführt, der die wenigstens zwei Solarmodule tragende wenigstens eine Modulträger als einteiliges Bauelement vorkonfektioniert und für die Errichtung des Carports zur Verfügung gestellt werden.

Bevorzugt wird demnach, wie hierin ausgeführt, der Schritt des Verbindens des wenigstens einen Modulträgers an der Tragkonstruktion derart, dass die Tragkonstruktion den wenigstens einen Modulträger über dem Untergrund trägt, erst ausgeführt, nachdem der Schritt des Anordnens der Tragkonstruktion an einem Untergrund abgeschlossen ist.

Insbesondere ist demnach erfindungsgemäß bevorzugt auch vorgesehen, dass der Schritt der zur Verfügungstellung wenigstens eines erfindungsgemäßen Modulträgers abgeschlossen ist, bevor der Schritt des Anordnens der Tragkonstruktion an einem Untergrund durchgeführt wird.

Weitere Merkmale ergeben sich aus den Ansprüchen, den Figuren und der zugehörigen, nachfolgenden Figurenbeschreibung.

Sämtliche Merkmale der Erfindung können, einzeln oder in Kombination, beliebig miteinander kombiniert sein.

In den Figuren zeigt
- Figur 1: ein erstes Ausführungsbeispiel eines erfindungsgemäßen Carports in einer perspektivischen Ansicht von schräg oben;
- Figur 2: einen der Modulträger des Carports gemäß Figur 1 in einer perspektivischen Ansicht von schräg oben;
- Figur 3a: den Träger des Modulträgers gemäß Figur 2 in einer perspektivischen Ansicht von schräg oben;
- Figur 3b: den Träger des Modulträgers gemäß Figur 2 in einer perspektivischen Ansicht von schräg oben mit abgehobenen Profilschienen;

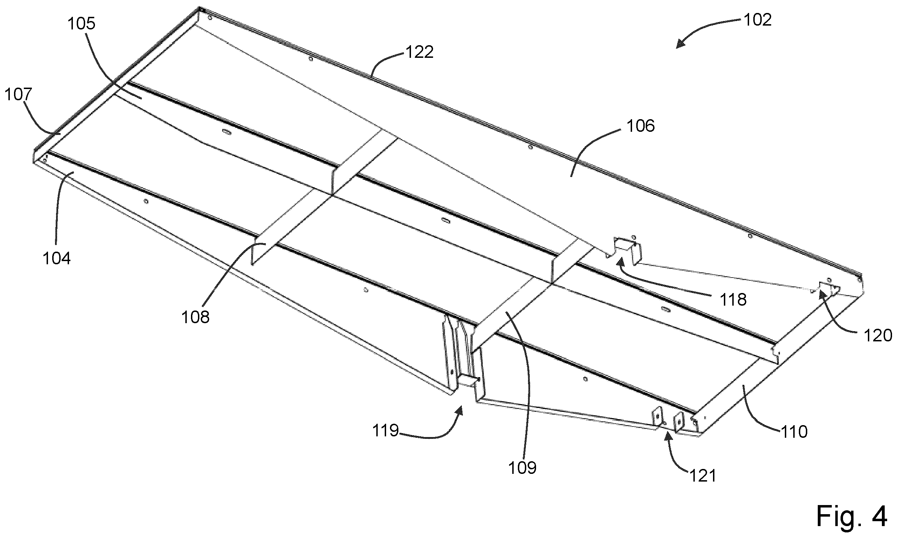

- Figur 4: den Träger des Modulträgers gemäß Figur 2 in einer perspektivischen Ansicht von schräg unten;
- Figur 5: ein zweites Ausführungsbeispiel eines erfindungsgemäßen Carports in einer perspektivischen Ansicht von schräg oben;
- Figur 6: einen der Modulträger des Carports gemäß Figur 5 in einer perspektivischen Ansicht von schräg oben;
- Figur 7: den Träger des Modulträgers gemäß Figur 6 in einer perspektivischen Ansicht von schräg oben;
- Figur 8a: den Carport gemäß Figur 5 in einer perspektivischen Ansicht von schräg unten; und
- Figur 8b: ein Detail der Ansicht gemäß Figur 8a.

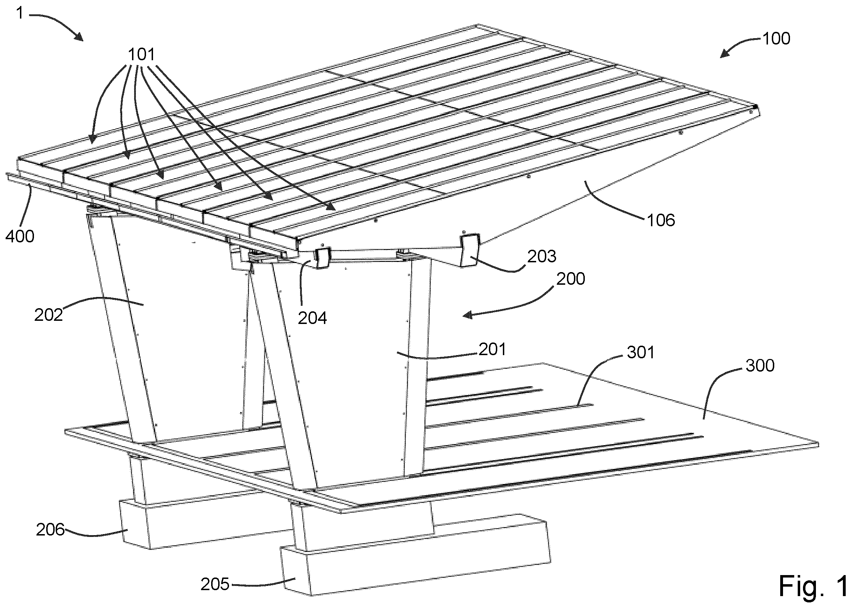

In seiner Gesamtheit ist der Carport gemäß Figur 1 mit dem Bezugszeichen 1 gekennzeichnet. Bei dem Carport 1 handelt es sich um einen freistehenden Carport für die Überdachung mehrerer Autos.

Der Carport 1 umfasst ein Dach 100 und eine Tragkonstruktion 200.

Die Tragkonstruktion 200 umfasst einen ersten Metallpfosten 201 und einen hiervon beabstandeten, zweiten Metallpfosten 202, die sich jeweils im wesentlichen vertikal erstrecken und an einem Untergrund 300 angeordnet sind. Der erste und zweite Metallpfosten 201, 202 sind an ihrem jeweils oberen Ende durch zwei voneinander beabstandete, den erste und zweite Metallpfosten 201, 202 miteinander verbindende, horizontal verlaufende Querträger 203, 204 miteinander verbunden. Der erste und zweite Metallpfosten 201, 202 sowie die Querträger 203, 204 sind jeweils als Stahlprofil ausgebildet. Die Querträger 203, 204 verlaufen in einer solchen Höhe, dass darunter Autos parken können. Der Untergrund 300 kann insoweit beispielsweise ein Parkplatz mit mehreren Stellflächen für Autos sein, angedeutet in Figur 1 durch Parkplatzmarkierungen 301 auf dem Untergrund 300. Fußseitig sind die Metallpfosten 201, 202 jeweils mit einem massiven Fundament 205, 206 aus Beton verschraubt. Die Fundamente 205, 206 befinden sich im Erdreich unterhalb des Untergrundes 300.

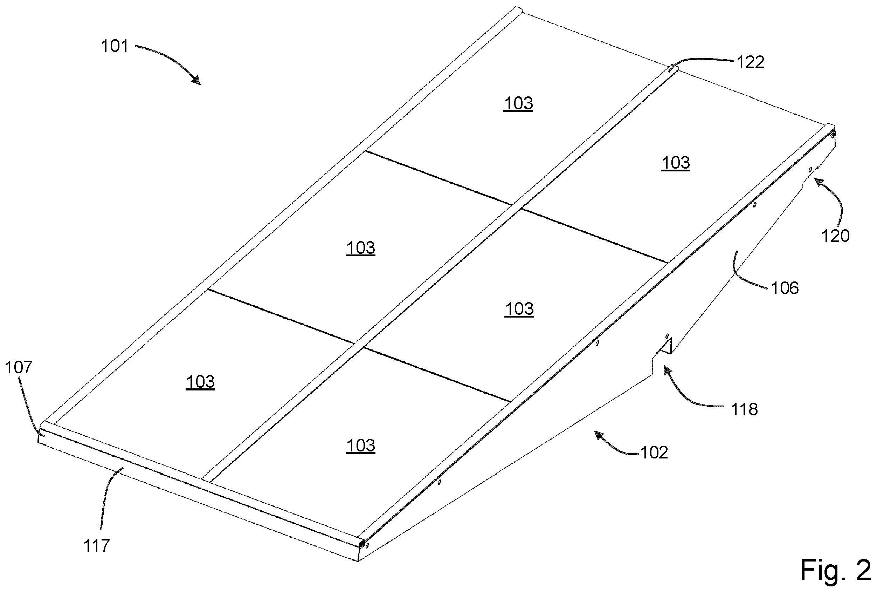

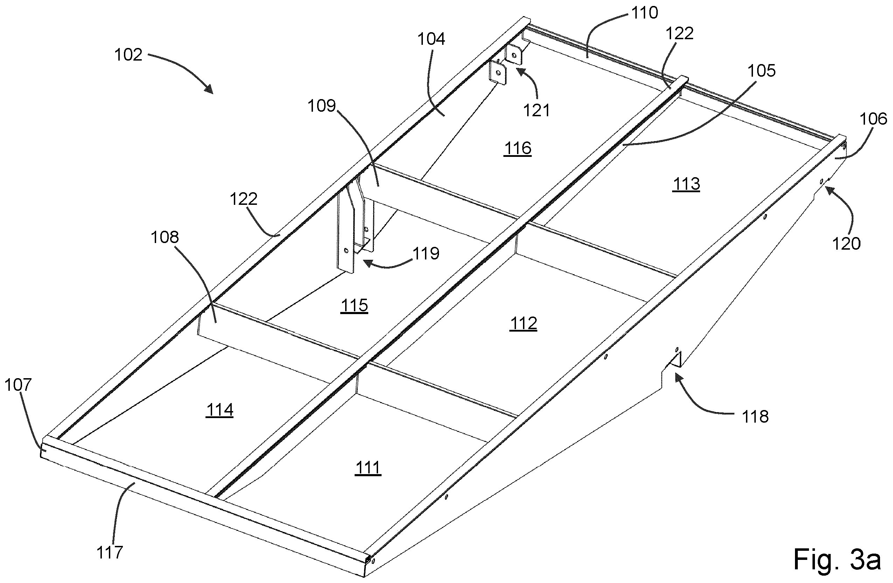

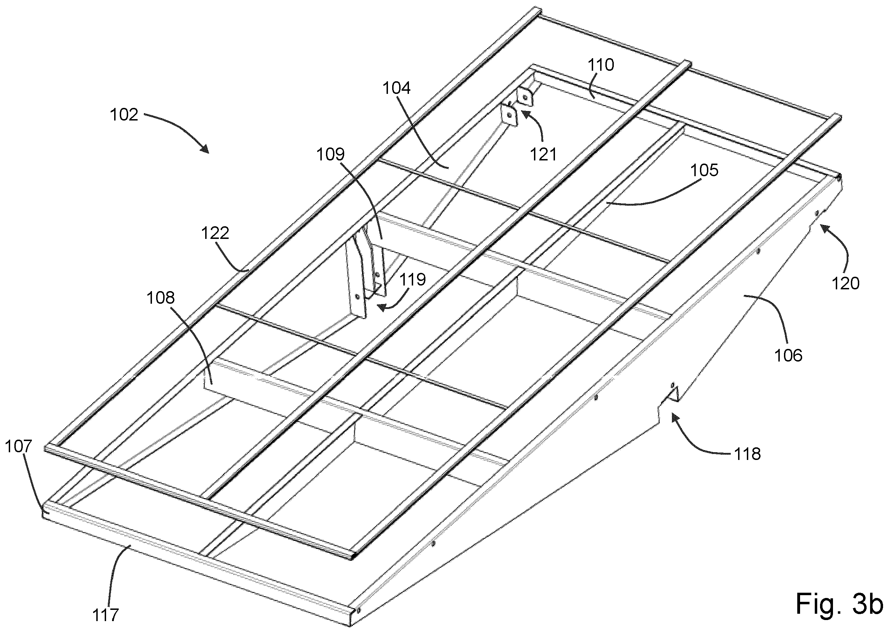

Das Dach 100 umfasst sechs Modulträger 101. Einer diese sechs Modulträger 101 ist in Figur 2 im Detail dargestellt. Jeder der Modulträger 101 ist wie folgt ausgeführt: Der Modulträger 101 umfasst einen Träger 102 sowie sechs Solarmodule 103. Der Träger 102 ist als Metallrahmenkonstruktion aus Metallprofilen ausgeführt. Drei der Metallprofile bilden Längsträger 104, 105, 106. Die drei Längsträger 104, 105, 106 sind gleichmäßig voneinander beabstandet, wobei zwischen den beiden äußeren Längsträgern 104, 106 mittig der Längsträger 105 verläuft. Ferner umfasst der Träger 102 vier Querprofile 107, 108, 109, 110, die gleichmäßig voneinander beabstandet die Längsträger 104, 105, 106 miteinander verbinden. Sämtliche der Metallprofilen 104, 105, 106, 107, 108, 109, 110 sind als Stahlhohlprofile ausgeführt. Die Längsträger 104, 105, 106 einerseits und die Querprofile 107, 108, 109, 110 andererseits verlaufen rechtwinklig zueinander. Hierdurch bildet der Träger 102, wie sich aus den Figuren 3a und 3b anschaulich ergibt, insgesamt sechs aus den Metallprofilen 104, 105, 106, 107, 108, 109, 110 gebildete Rahmen 111, 112, 113, 114, 115, 116. Der Träger 102 weist eine rechteckige Außenkontur 117 auf. Zu einer Seite hin, in den Figuren 1 bis 3 der nach oben weisenden Seite des Modulträgers 101, enden die Metallprofilen 104, 105, 106, 107, 108, 109, 110 im Wesentlichen bündig in einer Ebene. Auf dieser Seite des Trägers 102 weist dieser ferner Profilschienen aus Aluminium auf, die ein Gitter 122 bilden und die Metallprofile 104, 105, 106, 107, 108, 109, 110 auf dieser Seite nach oben hin im Wesentlichen abdecken. Über dieses Gitter 122 aus Profilschienen sind die Solarmodule 103 über die unten beschriebene Klebeverbindung hinaus zusätzlich kraftschlüssig mit dem Träger 102 verbunden. Zur gegenüberliegenden Seite hin, in den Figuren 1 bis 3 der nach unten weisenden Seite des Modulträgers 101, sind die äußeren Längsträger 104, 106 sich giebelförmig erstreckend ausgebildet. Am distalen Ende 118 dieses giebelförmigen Bereichs des äußeren Längsträger 106 sowie am distalen Ende 119 dieses giebelförmigen Bereichs des äußeren Längsträgers 104 sind die äußeren Längsträger 104, 106 jeweils derart ausgebildet, über eine Schraubverbindung mit der Oberseite des Querträgers 203 der Tragkonstruktion 200 verbunden werden zu können. Ferner sind der Längsträger 104 und der Längsträger 106 an ihrem jeweils randseitigen, zum Querträger 110 benachbarten Bereich 102, 121 derart ausgebildet, über eine weitere Schraubverbindung mit der Oberseite des Querträgers 204 der Tragkonstruktion 200 verbunden werden zu können.

In jedem der Rahmen 111, 112, 113, 114, 115, 116 des Trägers 102 ist jeweils ein Solarmodul 103 derart angeordnet, dass es von dem jeweiligen Rahmen 111, 112, 113, 114, 115, 116 seitlich vollständig eingefasst ist. Jedes Solarmodul 103 weist eine rechteckige Außenkontur auf. Jedes Solarmodul 103 ist über einen 1-Komponenten-Silikon-Kleber stoffschlüssig mit dem das Solarmodul 103 jeweils umgebenden Rahmen 111, 112, 113, 114, 115, 116 verbunden. Zusätzlich ist jedes Solarmodul 103, wie oben ausgeführt, über das Gitter 122 aus Profilleisten aus Aluminium kraftschlüssig mit dem Träger 102 verbunden.

Jeder der Modulträgers 101 ist, wie sich insbesondere aus Figur 2 anschaulich ergibt, als einteiliges Bauelement ausgeführt. Die Solarmodule 103 bilden dabei einen integralen Bestandteil des Modulträgers 101.

Jeder der sechs Modulträger 101 ist über Schraubverbindungen mit den Querträgern 203, 204 der Tragkonstruktion 100 verbunden. Die sechs Modulträger 101 sind sich unmittelbar aneinander anschließend jeweils mit der Tragkonstruktion 200 verbunden, so dass die Modulträger 101 ein durchgehendes Dach 100 des Carports 1 bilden. Wie sich aus Figur 1 ergibt, sind die Modulträger 101 dabei über dem Untergrund 300 derart getragen, dass darunter mehrere Autos auf dem Untergrund 300 parken können. Die Modulträger 101 sind derart mit den Querträgern 203, 204 verbunden, dass deren Oberseite zu einer Seite hin leicht zum Untergrund 300 geneigt ist. An der Unterkante zur abfallenden Seite hin ist eine Regenrinne 400 angeordnet.

Aufgrund der massiven Fundamente 205, 206 ist die Standsicherheit des Carports 1 gewährleistet.

Der Carport 1 wurde durch eine beispielhafte Ausführungsform eines erfindungsgemäßen Verfahrens errichtet. Hierzu wurden zunächst sechs Modulträger 101 gemäß Figur 2 zur Verfügung gestellt. Die sechs Modulträger 101 waren werkseitig in der in Figur 2 dargestellten Ausführung als einteilige Bauelement hergestellt worden.

Ferner wurde zur Verfügung gestellt die Tragkonstruktion 200. Hierzu wurden die Metallpfosten 201, 202 mit den Fundamenten 205, 206 verschraubt und anschließend die Querträger 203, 204 oberseitig der Metallpfosten 201, 202 mit diesen verbunden.

Mit der entsprechend zur Verfügung gestellten, an dem Untergrund 300 angeordneten Tragkonstruktion 200 wurden schließlich die sechs Modulträger 101 sukzessive nebeneinander verbunden. Hierzu wurden die Modulträger 101, wie oben ausgeführt, mittels Schrauben mit den Querträgern 203, 204 verschraubt.

Hieraus ergibt sich anschaulich, dass der Carport 1 bauseitig schnell, einfach und sicher errichtbar ist.

Ebenso schnell, einfach und sicher lassen sich die Module 101 durch einfaches Lösen der Schraubverbindung wieder von der Tragkonstruktion 200 lösen.

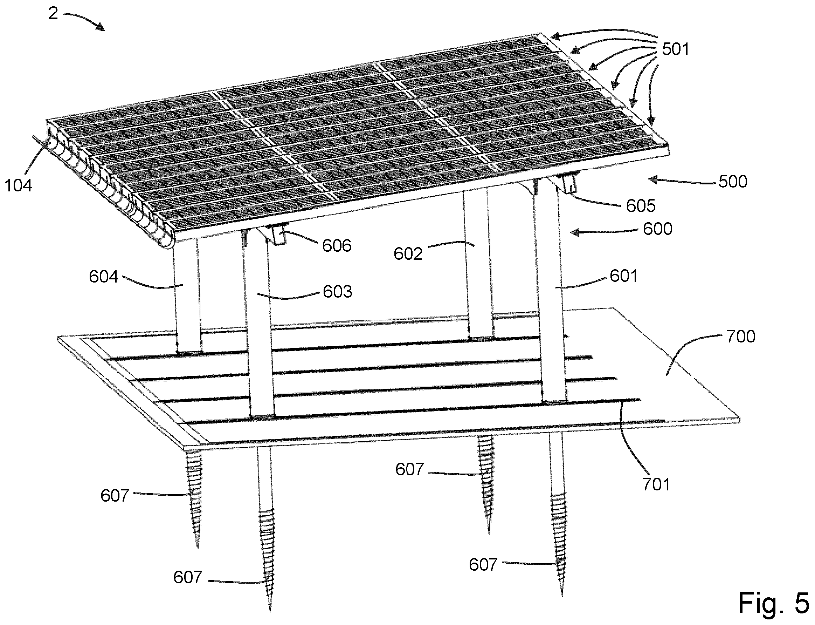

Das in den Figuren 5 bis 8b dargestellte zweite Ausführungsbeispiel eines erfindungsgemäßen Carports 2 entspricht in seinem Grundaufbau dem ersten Ausführungsbeispiel. Ein wesentlicher Unterschied besteht darin, dass der Carport 2 des zweiten Ausführungsbeispiels kleiner dimensioniert ist und daher nicht die massiven Fundamente 205, 206 des Carports 1 des ersten Ausführungsbeispieles aufweist.

In seiner Gesamtheit ist der Carport gemäß Figur 5 mit dem Bezugszeichen 2 gekennzeichnet. Bei dem Carport 2 handelt es sich um einen freistehenden Carport für die Überdachung mehrerer Autos.

Der Carport 2 umfasst ein Dach 500 und eine Tragkonstruktion 600.

Die Tragkonstruktion 600 umfasst ein erstes Paar beanstandeter Metallpfosten 601, 602 und ein hiervon beabstandetes, zweits Paar beabstandeter Metallpfosten 603, 604, die sich jeweils im Wesentlichen vertikal erstrecken und an einem Untergrund 700 angeordnet sind. Der erste Paar Metallpfosten 601, 602 ist an seinem jeweils oberen Ende durch einen, die Metallpfosten 601, 602 miteinander verbindenden, horizontal verlaufende Querträger 605 miteinander verbunden. In gleicher Weise ist das zweite Paar Metallpfosten 603, 604 an seinem jeweils oberen Ende durch einen, die Metallpfosten 603, 604 miteinander verbindenden, horizontal verlaufende Querträger 606 miteinander verbunden. Die Metallpfosten 601, 602, 603, 604 sowie die Querträger 605, 606 sind jeweils als Stahlprofil ausgebildet. Die Querträger 605, 606 verlaufen in einer solchen Höhe, dass darunter Autos parken können. Der Untergrund 700 kann insoweit beispielsweise ein Parkplatz mit mehreren Stellflächen für Autos sein, angedeutet in Figur 2 durch Parkplatzmarkierungen 701 auf dem Untergrund 700. Fußseitig sind die Metallpfosten 601, 602, 603, 604 jeweils mit einem Metallanker 607 verschraubt. Die Metallanker 607 sind im wesentlichen schraubenartig gestaltet und in das Erdreich unterhalb des Untergrundes 700 geschraubt.

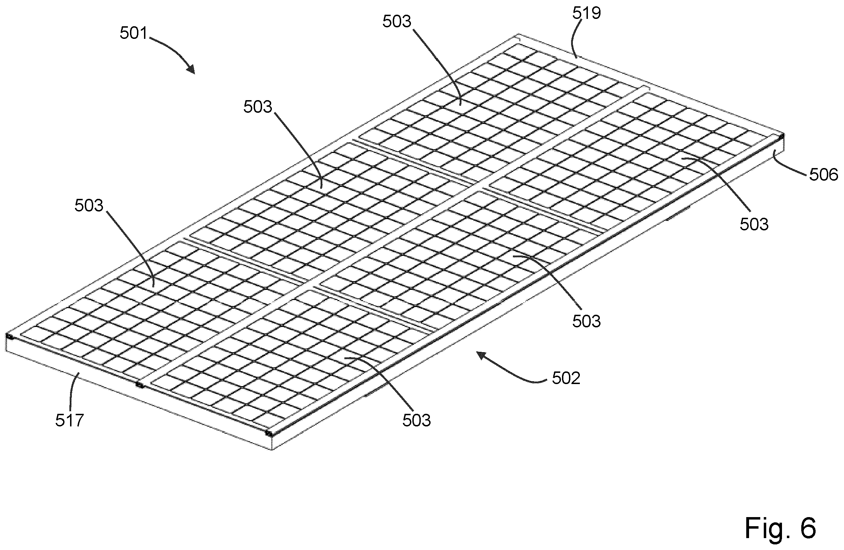

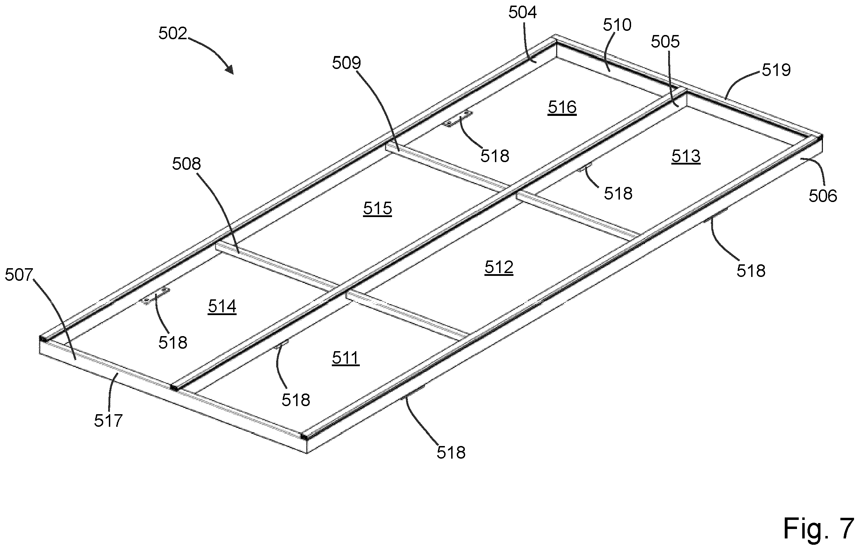

Das Dach 500 umfasst sechs Modulträger 501. Einer diese sechs Modulträger 501 ist in Figur 6 im Detail dargestellt. Jeder der Modulträger 501 ist wie folgt ausgeführt: Der Modulträger 501 umfasst einen Träger 502 sowie sechs Solarmodule 503. Der Träger 502 ist als Metallrahmenkonstruktion aus Metallprofilen ausgeführt. Drei der Metallprofile bilden Längsträger 504, 505, 506. Die drei Längsträger 504, 505, 506 sind gleichmäßig voneinander beabstandet, wobei zwischen den beiden äußeren Längsträgern 504, 506 mittig der Längsträger 505 verläuft. Ferner umfasst der Träger 502 vier Querprofile 507, 508, 509, 510, die gleichmäßig voneinander beabstandet die Längsträger 504, 505, 506 miteinander verbinden. Sämtliche der Metallprofilen 504, 505, 506, 507, 508, 509, 510 sind als Stahlhohlprofile ausgeführt. Die Längsträger 504, 505, 506 einerseits und die Querprofile 507, 508, 509, 510 andererseits verlaufen rechtwinklig zueinander. Hierdurch bildet der Träger 502, wie sich aus Figur 7 anschaulich ergibt, insgesamt sechs aus den Metallprofilen 504, 505, 506, 507, 508, 509, 510 gebildete Rahmen 511, 512, 513, 514, 515, 516. Der Träger 502 weist eine rechteckige Außenkontur 517 auf. Zu einer Seite hin, in den Figuren 5 bis 8b der nach oben weisenden Seite des Modulträgers 501, enden die Metallprofilen 504, 505, 506, 507, 508, 509, 510 im Wesentlichen bündig in einer Ebene. Auf dieser Seite des Trägers 502 weist dieser ferner Profilschienen aus Aluminium auf, die ein Gitter 519 bilden und die Metallprofile 504, 505, 506, 507, 508, 509, 510 auf dieser Seite nach oben hin im Wesentlichen abdecken. Über dieses Gitter 519 aus Profilschienen sind die Solarmodule 503 über die unten beschriebene Klebeverbindung hinaus zusätzlich kraftschlüssig mit dem Träger 502 verbunden. Zur gegenüberliegenden Seite hin, in den Figuren 5 bis 8b der nach unten weisenden Seite des Modulträgers 501, sind an den Längsträgern 504, 505, 506 Flansche 518 ausgebildet, um über diese das Modul 501 mittels Schraubverbindungen mit der Oberseite der Querträger 505, 506 verbinden zu können.

In jedem der Rahmen 511, 512, 513, 514, 515, 516 des Trägers 502 ist jeweils ein Solarmodul 503 derart angeordnet, dass es von dem jeweiligen Rahmen 511, 512, 513, 514, 515, 516 seitlich vollständig eingefasst ist. Jedes Solarmodul 503 weist eine rechteckige Außenkontur auf. Jedes Solarmodul 503 ist über einen 1-Komponenten-Silikon-Kleber stoffschlüssig mit dem das Solarmodul 503 jeweils umgebenden Rahmen 511, 512, 513, 514, 515, 516 verbunden. Zusätzlich ist jedes Solarmodul 503 über das Gitter 519 aus Profilschienen aus Aluminium, wie oben beschrieben, kraftschlüssig mit dem Träger 502 verbunden.

Jeder der Modulträgers 501 ist, wie sich insbesondere aus Figur 6 anschaulich ergibt, als einteiliges Bauelement ausgeführt. Die Solarmodule 503 bilden dabei einen integralen Bestandteil des Modulträgers 501.

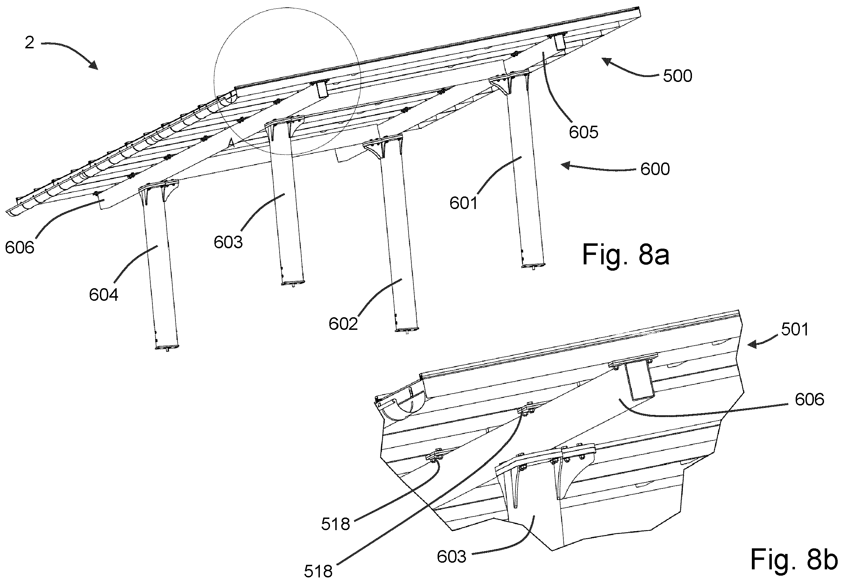

Jeder der sechs Modulträger 501 ist über Schraubverbindungen mit den Querträgern 505, 506 der Tragkonstruktion 500 verbunden, was sich insbesondere aus den Figuren 8a, 8b anschaulich ergibt. Die sechs Modulträger 501 sind sich unmittelbar aneinander anschließend jeweils der Tragkonstruktion 500 verbunden, so dass die Modulträger 501 ein durchgehendes Dach 200 des Carports 2 bilden. Wie sich aus Figur 5 ergibt, sind die Modulträger 501 dabei über dem Untergrund 700 derart getragen, dass darunter mehrere Autos auf dem Untergrund 700 parken können. Die Modulträger 501 sind derart mit den Querträgern 506, 507 verbunden, dass deren Oberseite zu einer Seite hin leicht zum Untergrund 700 geneigt ist. An der Unterkante zur abfallenden Seite hin ist eine Regenrinne 800 angeordnet.

In den Figuren 8a und 8b ist die Verbindung der Modulträger 501 mit den Querträgern 605, 606 zu erkennen. Insbesondere Figur 8b, die ein Detail aus Figur 8b gemäß dem dort eingekreisten Bereich darstellt, lässt erkennen, dass die Metallprofile 504, 505, 506, 507, 508, 509, 510 der Modulträger 501 über die Flanschverbindung 518 mit den Querträgern 605, 606 verschraubt sind. In Figur 8a ist der Carport 2 ohne die Metallanker 607 dargestellt.

Der Carport 2 wurde durch eine beispielhafte Ausführungsform eines erfindungsgemäßen Verfahrens errichtet. Hierzu wurden zunächst sechs Modulträger 501 gemäß Figur 6 zur Verfügung gestellt. Die sechs Modulträger 501 waren werkseitig in der in Figur 6 dargestellten Ausführung als einteilige Bauelement hergestellt worden.

Ferner wurde zur Verfügung gestellt die Tragkonstruktion 500. Hierzu wurden die Metallpfosten 501, 502, 503, 504 mit den Metallankern 607 verschraubt und anschließend die Querträger 605, 606 oberseitig der Metallpfosten 501, 502, 503, 504 mit diesen verbunden.

Mit der entsprechend zur Verfügung gestellten, an dem Untergrund 700 angeordneten Tragkonstruktion 600 wurden schließlich die sechs Modulträger 501 sukzessive nebeneinander verbunden. Hierzu wurden die Modulträger 501, wie oben ausgeführt, mittels Schrauben mit den Querträgern 605, 606 verschraubt.

Hieraus ergibt sich anschaulich, dass auch der Carport 2 bauseitig schnell, einfach und sicher errichtbar ist.

Ebenso schnell, einfach und sicher lassen sich die Module 501 durch einfaches Lösen der Schraubverbindung wieder von der Tragkonstruktion 600 lösen.

## Patentansprüche

1. Carport (1; 2) mit integrierten Solarmodulen (103; 503), umfassend:
1.1 eine Tragkonstruktion (200; 600) und
1.2 wenigstens einen Modulträger (101; 501); wobei
1.3 die Tragkonstruktion (200; 600) an einem Untergrund (300; 700) angeordnet ist; wobei
1.4 der wenigstens eine Modulträger (101; 501) über eine Verbindung derart mit der Tragkonstruktion (200; 600) verbunden ist, dass die Tragkonstruktion (200; 600) den wenigstens einen Modulträger (101; 501) über dem Untergrund (300; 700) trägt; wobei
1.5 der wenigstens eine Modulträger (101; 501) wenigstens zwei Solarmodule (103; 503) umfasst; **dadurch gekennzeichnet, dass**
1.6 der wenigstens eine Modulträger (101; 501) als einteiliges Bauelement ausgeführt ist; wobei
1.7 der wenigstens eine Modulträger (101; 501) aus Metallprofilen (104-110; 504-510) gebildete Rahmen (111-116; 511-516) umfasst; und wobei
1.8 jedes der wenigstens zwei Solarmodule (103, 503) jeweils von einem der Rahmen (111-116; 511-516) seitlich eingefasst ist.

2. Carport (1; 2) nach Anspruch 1, wobei die Verbindung, mittels derer der wenigstens eine Modulträger (101; 501) mit der Tragkonstruktion (200; 600) verbunden ist, lösbar ist.

3. Carport (1; 2) nach wenigstens einem der vorhergehenden Ansprüche, wobei der wenigstens eine Modulträger (101; 501) Metallprofile (104-110; 504-510) umfasst.

4. Carport (1; 2) nach wenigstens einem der vorhergehenden Ansprüche, wobei der wenigstens eine Modulträger (101; 501) als Metallrahmenkonstruktion ausgeführt ist.

5. Carport (1; 2) nach wenigstens einem der vorhergehenden Ansprüche, wobei jedes der wenigstens zwei Solarmodule (103; 503) jeweils mit dem dieses jeweils seitlich einfassenden Rahmen (111-116; 511-516) verbunden ist.

6. Carport (1; 2) nach wenigstens einem der vorhergehenden Ansprüche, wobei jedes der wenigstens zwei Solarmodule (103, 503) jeweils mit dem dieses jeweils seitlich einfassenden Rahmen (111-116; 511-516) verklebt ist.

7. Carport (1; 2) nach wenigstens einem der vorhergehenden Ansprüche, wobei der wenigstens eine Modulträger (101; 501) eine rechteckige Außenkontur (117; 517) aufweist.

8. Carport (1; 2) nach wenigstens einem der vorhergehenden Ansprüche, wobei der wenigstens eine Modulträger (101, 501) über eine kraftschlüssige Verbindung mit der Tragkonstruktion (200; 600) verbunden ist.

9. Carport (1; 2) nach wenigstens einem der vorhergehenden Ansprüche, wobei der wenigstens eine Modulträger (101; 501) über eine Schraubverbindung mit der Tragkonstruktion (200; 600) verbunden ist.

10. Carport (1; 2) nach wenigstens einem der vorhergehenden Ansprüche, wobei die Tragkonstruktion (200; 600) aus Metall ausgebildet ist.

11. Carport (1; 2) nach wenigstens einem der vorhergehenden Ansprüche, wobei die Tragkonstruktion (200; 600) wenigstens ein vertikal verlaufendes Tragelement (203, 204; 605, 606) umfasst, mit dem der wenigstens eine Modulträger (101; 501) verbunden ist.

12. Modulträger (101;501) für einen Carport (1; 2) mit integrierten Solarmodulen (103; 503), wobei der Modulträger (101; 501) umfasst:
12.1 wenigstens zwei Solarmodule (103; 503), wobei
12.2 der Modulträger (101; 501) derart gestaltet ist, dass er über eine Verbindung derart mit einer Tragkonstruktion (200; 600) des Carports (1; 2) verbindbar ist, dass der Modulträger (101; 501) mittels der Tragkonstruktion (200; 600) über einem Untergrund (300; 700) tragbar ist, wenn die Tragkonstruktion (200; 600) an einem Untergrund (300; 700) angeordnet ist; **dadurch gekennzeichnet, dass**
12.3 der Modulträger (101; 501) als einteiliges Bauelement ausgeführt ist; wobei
12.4 der wenigstens eine Modulträger (101; 501) aus Metallprofilen (104-110; 504-510) gebildete Rahmen (111-116; 511-516) umfasst; und wobei
12.5 jedes der wenigstens zwei Solarmodule (103, 503) jeweils von einem der Rahmen (111-116; 511-516) seitlich eingefasst ist.

13. Verfahren zur Errichtung eines Carports (1; 2) mit integrierten Solarmodulen (103; 503), umfassend die folgenden Schritte:
A. zur Verfügungstellung wenigstens eines Modulträgers (101; 501) nach Anspruch 12;
B. zur Verfügungstellung einer Tragkonstruktion (200; 600);
C. Anordnen der Tragkonstruktion (200; 600) an einem Untergrund (300; 700);
D. Verbinden des wenigstens einen Modulträgers (101; 501) an der Tragkonstruktion (200; 600) derart, dass die Tragkonstruktion (200; 600) den wenigstens einen Modulträger (101; 501) über dem Untergrund (300; 700) trägt.

## Claims

1. Carport (1; 2) with integrated solar modules (103; 503), comprising:
1.1 a supporting structure (200; 600) and
1.2 at least one module support (101; 501); wherein
1.3 the supporting structure (200; 600) is arranged on a substrate (300; 700); wherein
1.4 the at least one module support (101; 501) is connected to the supporting structure (200; 600) via a connection in such a way that the supporting structure (200; 600) supports the at least one module support (101; 501) above the substrate (300; 700); wherein
1.5 the at least one module support (101; 501) comprises at least two solar modules (103; 503); **characterized in that**
1.6 the at least one module support (101; 501) is designed as a one-piece component; wherein
1.7 the at least one module support (101; 501) comprises frames (111-116; 511-516) made of metal profiles (104-110; 504-510); and wherein
1.8 each of the at least two solar modules (103, 503) is enclosed laterally by one of the frames (111-116; 511-516).

2. Carport (1; 2) according to Claim 1, wherein the connection, by means of which the at least one module support (101; 501) is connected to the supporting structure (200; 600), is releasable.

3. Carport (1; 2) according to at least one of the preceding claims, wherein the at least one module support (101; 501) comprises metal profiles (104-110; 504-510).

4. Carport (1; 2) according to at least one of the preceding claims, wherein the at least one module support (101; 501) is designed as a metal frame structure.

5. Carport (1; 2) according to at least one of the preceding claims, wherein each of the at least two solar modules (103; 503) is connected in each case to the frame (111-116; 511-516) which laterally encloses it.

6. Carport (1; 2) according to at least one of the preceding claims, wherein each of the at least two solar modules (103; 503) is adhesively bonded in each case to the frame (111-116; 511-516) which laterally encloses it.

7. Carport (1; 2) according to at least one of the preceding claims, wherein the at least one module support (101; 501) has a rectangular outer contour (117; 517).

8. Carport (1; 2) according to at least one of the preceding claims, wherein the at least one module support (101, 501) is connected to the supporting structure (200; 600) via a force-fitting connection.

9. Carport (1; 2) according to at least one of the preceding claims, wherein the at least one module support (101; 501) is connected to the supporting structure (200; 600) via a screw connection.

10. Carport (1; 2) according to at least one of the preceding claims, wherein the supporting structure (200; 600) is formed of metal.

11. Carport (1; 2) according to at least one of the preceding claims, wherein the supporting structure (200; 600) comprises at least one vertically extending support element (203, 204; 605, 606), to which the at least one module support (101; 501) is connected.

12. Module support (101; 501) for a carport (1; 2) with integrated solar modules (103; 503), wherein the module support (101; 501) comprises:
12.1 at least two solar modules (103; 503), wherein
12.2 the module support (101; 501) is designed so as to be connectable to a supporting structure (200; 600) of the carport (1; 2) via a connection in such a way that the module support (101; 501) is supportable over a substrate (300; 700) by means of the supporting structure (200; 600) when the supporting structure (200; 600) is positioned on a substrate (300; 700); **characterized in that**
12.3 the module support (101; 501) is designed as a one-piece component; wherein
12.4 the at least one module support (101; 501) comprises frames (111-116; 511-516) made of metal profiles (104-110; 504-510); and wherein
12.5 each of the at least two solar modules (103, 503) is enclosed laterally by one of the frames (111-116; 511-516).

13. Method for erecting a carport (1; 2) with integrated solar modules (103; 503), comprising the following steps:
A. providing at least one module support (101; 501) according to Claim 12;
B. providing a supporting structure (200; 600);
C. arranging the supporting structure (200; 600) on a substrate (300; 700);
D. connecting the at least one module support (101; 501) to the supporting structure (200; 600) in such a way that the supporting structure (200; 600) supports the at least one module support (101; 501) above the substrate (300; 700).

## Revendications

1. Abri de transport (1 ; 2) à modules solaires intégrés (103 ; 503) comprenant :
1.1 une structure porteuse (200 ; 600) et
1.2 au moins un support de module (101 ; 501), sachant que
1.3 la structure porteuse (200 ; 600) est disposée sur un fond (300 ; 700), sachant que
1.4 au moins un support de module (101 ; 501) est relié par le biais d'une liaison à la structure porteuse (200 ; 600) de telle manière que la structure porteuse (200 ; 600) porte au moins un support de module (101 ; 501) sur le fond (300 ; 700), sachant que
1.5 au moins un support de module (101 ; 501) comprend au moins deux modules solaires (103 ; 503), **caractérisé en ce que**
1.6 au moins un support de module (101 ; 501) est exécuté sous la forme d'un élément structural en une pièce, sachant que
1.7 au moins un support de module (101 ; 501) comprend des cadres (111-116 ; 511-516) formés de profilés métalliques (104-110 ; 504-510), et sachant que
1.8 chacun des au moins deux modules solaires (103, 503) est respectivement enchâssé latéralement par un des cadres (111-116 ; 511-516).

2. Abri de transport (1 ; 2) selon la revendication 1, sachant que la liaison, au moyen de laquelle au moins un support de module (101; 501) est relié à la structure porteuse (200 ; 600), est amovible.

3. Abri de transport (1 ; 2) selon au moins l'une quelconque des revendications précédentes, sachant qu'au moins un support de module (101 ; 501) comprend des profilés métalliques (104-110 ; 504-510).

4. Abri de transport (1 ; 2) selon au moins l'une quelconque des revendications précédentes, sachant qu'au moins un support de module (101 ; 501) est exécuté sous la forme d'une structure à cadre métallique.

5. Abri de transport (1 ; 2) selon au moins l'une quelconque des revendications précédentes, sachant que chacun des au moins deux modules solaires (103 ; 503) peut être respectivement relié au cadre (111-116 ; 511-516) enchâssant respectivement latéralement celui-ci.

6. Abri de transport (1 ; 2) selon au moins l'une quelconque des revendications précédentes, sachant que chacun des au moins deux modules solaires (103 ; 503) peut être respectivement collé au cadre (111-116 ; 511-516) enchâssant respectivement latéralement celui-ci.

7. Abri de transport (1 ; 2) selon au moins l'une quelconque des revendications précédentes, sachant qu'au moins un support de module (101 ; 501) comporte un contour extérieur rectangulaire (117 ; 517).

8. Abri de transport (1 ; 2) selon au moins l'une quelconque des revendications précédentes, sachant qu'au moins un support de module (101, 501) est relié par le biais d'une liaison par conformité de force à la structure porteuse (200 ; 600).

9. Abri de transport (1 ; 2) selon au moins l'une quelconque des revendications précédentes, sachant qu'au moins un support de module (101 ; 501) est relié par le biais d'une liaison à vis à la structure porteuse (200 ; 600).

10. Abri de transport (1 ; 2) selon au moins l'une quelconque des revendications précédentes, sachant que la structure porteuse (200 ; 600) est constituée en métal.

11. Abri de transport (1 ; 2) selon au moins l'une des revendications précédentes, sachant que la structure porteuse (200 ; 600) comprend au moins un élément de support (203, 204 ; 605, 606) passant verticalement avec lequel au moins un support de module (101 ; 501) est relié.

12. Support de module (101 ; 501) pour un abri de transport (1 ; 2) à modules solaires intégrés (103 ; 503), sachant que le support de module (101 ; 501) comprend :
12.1 au moins deux modules solaires (103 ; 503), sachant que
12.2 le support de module (101 ; 501) est configuré de telle manière qu'il peut être relié par une liaison à une structure porteuse (200 ; 600) de l'abri de transport (1 ; 2) de telle sorte que le support de module (101 ; 501) peut être porté sur un fond (300 ; 700) au moyen de la structure porteuse (200 ; 600), lorsque la structure porteuse (200 ; 600) est disposée sur un fond (300 ; 700), **caractérisé en ce que**
12.3 le support de module (101 ; 501) est exécuté sous la forme d'un élément structural en une pièce, sachant que
12.4 au moins un support de module (101 ; 501) comprend un cadre (111-116 ; 511-516) formé de profilés métalliques (104-110 ; 504-510), et sachant que
12.5 chacun des au moins deux modules solaires (103, 503) est respectivement enchâssé latéralement par un des cadres (111-116 ; 511-516).

13. Procédé d'érection d'un abri de transport (1 ; 2) à modules solaires intégrés (103 ; 503) comprenant les étapes suivantes :
A. mise à disposition d'au moins un support de module (101 ; 501) selon la revendication 12,
B. mise à disposition d'une structure porteuse (200 ; 600),
C. mise en place de la structure porteuse (200 ; 600) sur un fond (300 ; 700),
D. liaison d'au moins un support de module (101 ; 501) à la structure porteuse (200 ; 600) de telle manière que la structure porteuse (200 ; 600) porte au moins un support de module (101 ; 501) sur le fond (300 ; 700).
